# EUROPÄISCHE PATENTSCHRIFT

(11) **EP 0 815 406 B1**
(45) Veröffentlichungstag und Bekanntmachung des Hinweises auf die Patenterteilung: **08.09.1999**
(21) Anmeldenummer: 96905731.4
(22) Anmeldetag: 07.03.1996
(51) Int. Cl.: F28F 27/02, F23M 9/00

(54) **ANLAGE ZUR INDIREKTEN ÜBERTRAGUNG VON WÄRME AUF EIN PROZESSMEDIUM**
ARRANGEMENT FOR INDIRECTLY TRANSFERRING HEAT TO A PROCESS MEDIUM
UNITE DE TRANSFERT INDIRECT DE CHALEUR A UN MILIEU DE PROCESSUS

(30) Priorität: 22.03.1995 DE 19512219
(43) Veröffentlichungstag der Anmeldung: 07.01.1998
(73) Patentinhaber: MANNESMANN Aktiengesellschaft, 40213 Düsseldorf (DE); K.T.I. Group B.V., NL-2700 AB Zoetermeer (NL)
(72) Erfinder: WATERREUS, Franciscus, Petrus, Marie, NL-2623 PC Delft (NL); NOMDEN, Jan, Frederik, NL-2715 AM Zoetermeer (NL); VAN DER PLAS, Willem, NL-2221 GX Katwijk aan Zee (NL)
(74) Vertreter: Meissner, Peter E., Dipl.-Ing.
(86) Internationale Anmeldenummer: DE9600458
(87) Internationale Veröffentlichungsnummer: WO9629559

(56) Entgegenhaltungen:
- DE-C- 919 657
- FR-A- 2 194 927
- H. Titze, "Elemente des Apparatebaus", Springer-Verlag, 1963, Seiten 204,205
- B.M.Tidall, D. L. King, Designing steam reformers for hydrogen production, Hydrocarbon Processing,July 1994

## Beschreibung

Die Erfindung betrifft eine Anlage zur indirekten Übertragung von Wärme auf ein Prozeßmedium, insbesondere zur Durchführung der Dampfreformierung von Kohlenwasserstoffen, gemäß dem Oberbegriff des Patentanspruchs 1.

Eine derartige Anlage ist aus der Praxis bekannt.

Aus der DE-PS 919 657 ist eine Vorrichtung zur Umlenkung von Gasen bekannt, bei der die Gase durch lange Kanäle strömen. Diese Vorrichtung dient zur gleichmäßigen Verteilung auf Austrittsöffnungen in den Seitenwänden der Kanäle und besteht aus hakenförmig gebogenen Schaufeln, die quer zur Strömungsrichtung in den Kanal hineinragen.

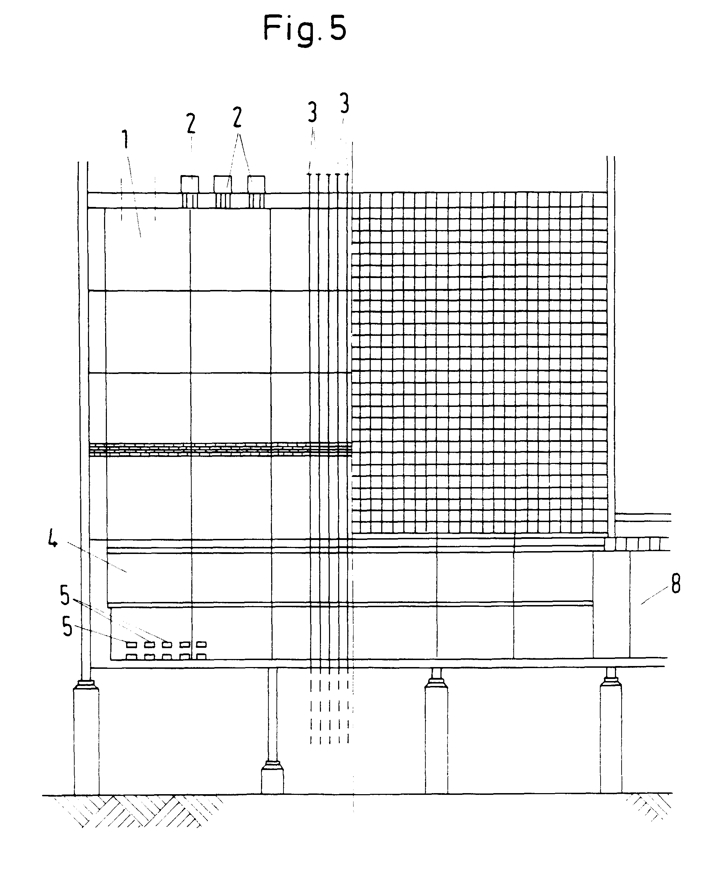

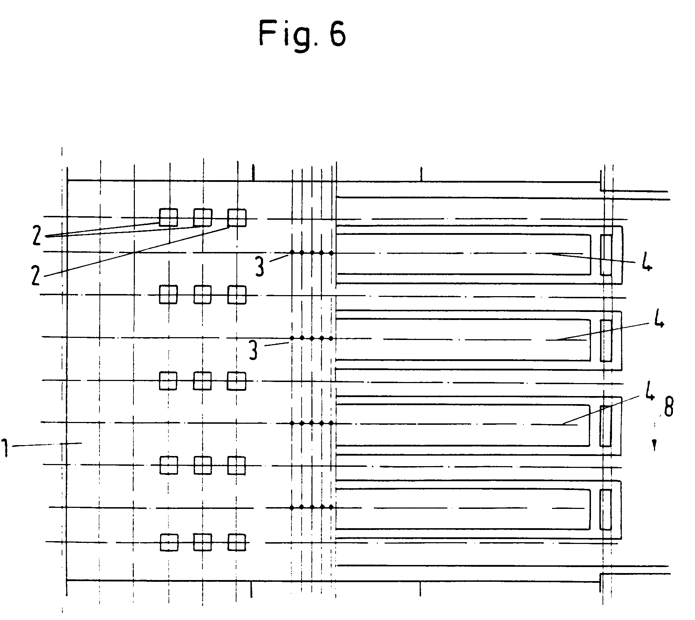

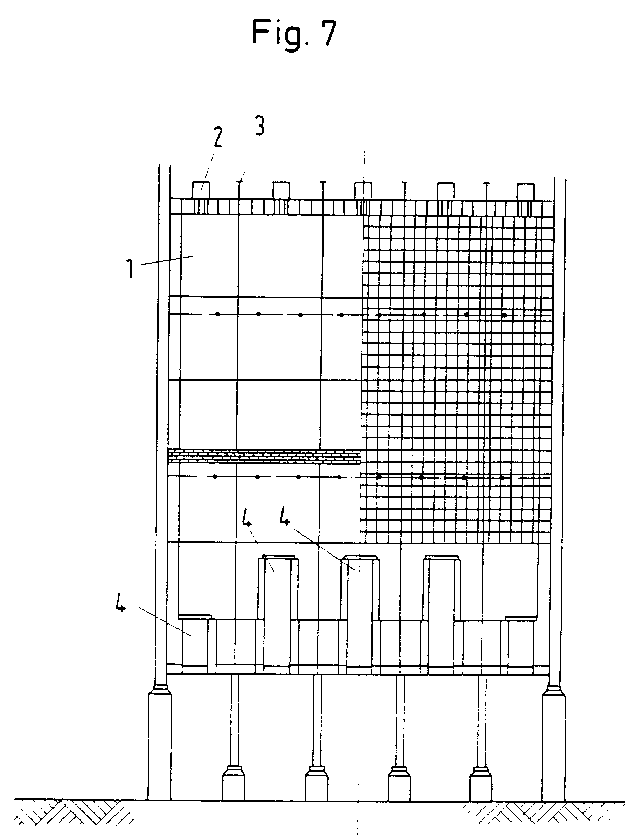

Für die Dampfreformierung von Kohlenwasserstoffen werden vielfach Anlagen eingesetzt, die wie das in den Fig. 5 bis 7 in verschiedenen Ansichten und Teilschnitten dargestellte Beispiel ausgeführt sind. Die Anlage weist einen im wesentlichen quaderförmigen Heizraum 1 auf, der durch eine Vielzahl von Brennem 2 beheizbar ist, die zu Brennerreihen zusammengefaßt im Dach des Quaders angeordnet und mit ihrer Flammrichtung vertikal nach unten gerichtet sind. Zwischen den Brennerreihen sind jeweils in einer vertikalen Ebene Reihen von Wärmetauscherrohren 3 angeordnet, durch die das Prozeßmedium für die endotherme chemische Reaktion hindurchleitbar ist. Die Erwärmung des Prozeßmediums erfolgt überwiegend durch die in der Verbrennung erzeugte Strahlungswärme, teilweise aber auch durch Konvektion. Um die Verbrennungsgase aus dem Heizraum 1 abführen zu können, sind am Boden des Heizraums 1 parallel zu den Reihen der Wärmetauscherrohre 3 und den Brennerreihen 2 verlaufende, oben geschlossene Abgaskanäle 4 angeordnet. Diese Abgaskanäle 4 weisen eine im wesentlichen rechteckige Querschnittsform auf. Sie sind aus einem feuerfesten Material (z.B. aus Feuerfeststeinen gemauert) hergestellt. Im unteren Teil der Seitenwände der Rauchgaskanäle 4 sind verteilt über deren axiale Länge zahlreiche Öffnungen 5 angeordnet, durch die das Abgas vom Heizraum 1 in das Innere der Abgaskanäle 4 gelangen kann. Es strömt dann durch die Abgaskanäle 4 seitlich aus dem Heizraum 1 heraus, gelangt in einen Sammelkanal 8, in dem alle Abgaskanäle 4 münden, und wird von dort einer Nutzung der noch im Abgas enthaltenen Restwärme zugeführt und anschließend ins Freie abgeleitet.

Im praktischen Betrieb einer Anlage der dargestellten Art stellt man fest, daß die Verhältnisse beim Wärmeübergang an den Wärmetauscherrohren nicht gleichförmig sind. Dies äußert sich in Belastungen bei der Wartung einer solchen Anlage. Wenn einige der Wärmetauscherrohre einem stärkeren Wärmeeinfluß ausgesetzt sind, altern sie schneller und müssen entsprechend früher ausgetauscht werden. In einer solchen Situation steht man vor der Wahl, entweder alle Wärmetauscherrohre einschließlich derjenigen, die an sich noch nicht ausgetauscht werden müßten, zu ersetzen oder lediglich einen Teil der Wärmetauscherrohre auszutauschen. Letzteres führt zu häufigeren Betriebsunterbrechungen für die Durchführung der Wartung und Reparatur.

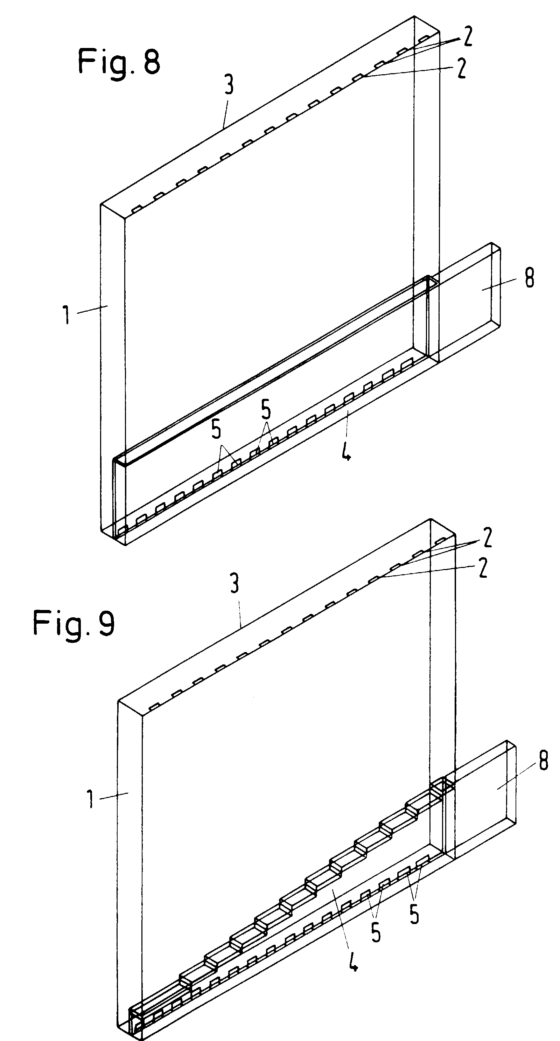

Da die Beheizung der Wärmetauscherrohre zum größeren Teil durch Strahlungswärme erfolgt, ist es von entscheidender Bedeutung, daß die Wärmetauscherrohre in einer Form angeordnet sind, bei der alle Wärmetauscherrohre bezüglich der Einwirkung der Wärmestrahlungsquelle gleichen Verhältnissen unterliegen. Bei einer rechteckigen Querschnittsform der Abgaskanäle ist dies im Grundsatz der Fall. Durch einen scheibenförmigen Schnitt durch einen Heizraum 1 ist ein solcher rechteckiger Kanal in Fig. 8 in schematisierter Form näher dargestellt. Die Öffnungen für den Durchtritt der Abgase in den Seitenwänden des Abgaskanals 4 sind mit dem Bezugszeichen 5 bezeichnet worden. Eine andere bekannte Form für einen Abgaskanal 4a ist in Fig. 9 dargestellt. Dieser Abgaskanal 4a hat zwar im Querschnitt ebenfalls eine rechteckige Form, jedoch verändert sich dieser Querschnitt in Richtung auf die Seite des Abgasabzugs (Sammelkanal 8) fortlaufend. Das treppenstufenartige Dach des Abgaskanals 4a ist so geneigt, daß sich der Querschnitt zum Sammelkanal 8 hin fortlaufend vergrößert. Mit dieser Gestaltung des Abgaskanals 4a sollte an sich erreicht werden, daß der Abgasabzug über die axiale Länge des Abgaskanals gesehen gleichmäßig erfolgt. Dies ist nämlich bei dem quaderförmig gestalteten Abgaskanal 4 in Fig. 8 wegen des Druckverlustes nicht der Fall. Aber auch die Form des Abgaskanals 4a bringt in dieser Hinsicht keine wirksame Verbesserung. Daher kommt es in beiden Fällen zu einer ungleichmäßigen Erwärmung der Wärmetauscherrohre.

Würde es gelingen, eine gleichmäßige Verteilung beim Wärmeübergang auf die Wärmetauscherrohre sicherzustellen, könnten die Wärmetauscherrohre mit einer dünneren Wanddicke ausgelegt werden, weil höhere Wandtemperaturen einiger Rohre, wie sie bei ungleichförmigen Wärmeverteilungen auftreten, nicht mehr berücksichtigt werden müßten. Dementsprechend könnten im Betrieb schärfere Betriebsbedingungen angewandt werden oder die Lebensdauer der Wärmetauscherrohre würde sich bei normalem Betrieb verlängern.

Aufgabe der Erfindung ist es, eine Anlage der im Oberbegriff des Patentanspruchs 1 angegebenen Art dahingehend weiterzuentwickeln, daß eine möglichst gleichmäßige Wärmeverteilung beim Wärmeübergang auf die Wärmetauscherrohre sichergestellt wird.

Gelöst wird diese Aufgabe erfindungsgemäß mit den kennzeichnenden Merkmalen des Patentanspruchs 1. Vorteilhafte Weiterbildungen der Erfindung sind in den Unteransprüchen 2 und 3 angegeben.

Nachfolgend wird die Erfindung anhand der Zeichnungen näher erläutert. Es zeigen:
- Fig. 1: einen scheibenförmigen Schnitt durch einen Heizraum mit erfindungsgemäßem Abgaskanal,
- Fig. 2: eine Abwandlung der Ausführungsform von Fig. 1,
- Fig. 3: das Profil der vertikalen Komponente der Abgasgeschwindigkeit in der Nähe einer Wärmetauscherrohrreihe entlang einem Abgaskanal in Abhängigkeit von der Höhe über dem Boden des Heizraums in einer erfindungsgemäßen Anlage und
- Fig. 4: eine Vergleichsdarstellung gemäß Fig. 3 für eine Anlage mit herkömmlichem Abgaskanal
und als Stand der Technik:
- Fig. 5: eine Seitenansicht einer Dampfreformieranlage (teilweise geschnitten).
- Fig. 6: eine Draufsicht auf die Anlage gemäß Fig. 5 (teilweise geschnitten),
- Fig. 7: eine Stirnseitenansicht der Anlage gemäß Fig. 5 (teilweise geschnitten).
- Fig. 8: einen scheibenförmigen schematischen Schnitt durch einen Heizraum mit quaderförmigem Abgaskanal.
- Fig. 9: einen scheibenförmigen Schnitt durch einen Heizraum mit geneigtem Abgaskanal,

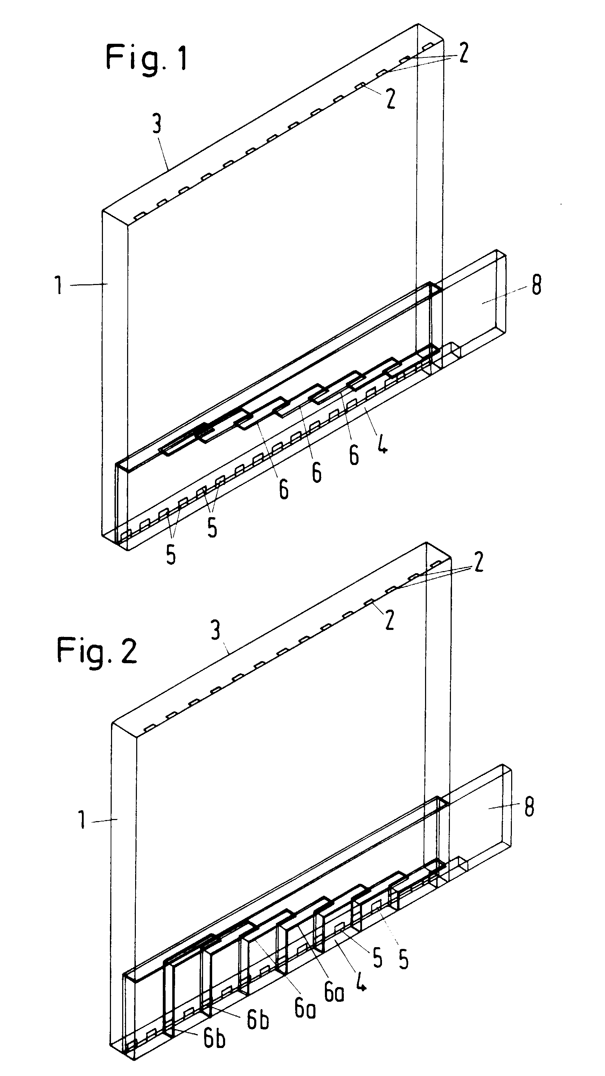

Die Aufgabe der Erfindung konnte mit überraschend einfachen Mitteln gelöst werden. Eine besonders einfache Ausführungsform der Erfindung ist in der Fig. 1 in Form eines scheibenförmigen Schnittes durch einen Heizraum entlang eines Abgaskanals 4 schematisch dargestellt. Es wurden lediglich eine Reihe von Strömungsleitkörpern in Form von Leitblechen 6 im Inneren des Abgaskanals 4 angeordnet. Die Leitbleche 6 sind im wesentlichen horizontal in Axialrichtung (Strömungsrichtung) des Abgaskanals 4 verlaufende flache Körper mit im Vergleich zum Kanalquerschnitt dünner Wanddicke. Sie erstrecken sich zwischen den Längswänden des Abgaskanals 4 über dessen gesamte Breite. Sie sind aus einem den Einsatzbedingungen entsprechenden wärmebeständigen Material wie etwa Feuerfestmaterial oder einem hitzebeständigen metallischen Werkstoff hergestellt. Der Begriff Leitblech umfaßt daher nicht zwangsläufig nur metallische Werkstoffe. Vielmehr soll mit diesem Begriff ausgedrückt werden, daß die Abgasströmung innerhalb des Abgaskanals 4 beeinflußt wird im Sinne einer Vergleichmäßigung in axialer Richtung. Die Länge der Leitbleche 6 beträgt lediglich jeweils einen kleinen Bruchteil der gesamten axialen Länge des Abgaskanals 4. Die einzelnen Leitbleche 6 sind insgesamt treppenförmig angeordnet, wobei die Stufung in Richtung auf den Sammelkanal 8 nach unten führt. Zweckmäßigerweise überlappen sich die einzelnen unmittelbar benachbarten Leitbleche 6 um ein kleines Stück. Das Abgas gelangt durch die in gleicher Weise wie in Fig. 5 angeordneten, also sich nahe am Boden des Heizraums 1 befindlichen Abgasdurchtrittsöffnungen 5 in das Innere des Abgaskanals 4. Dort strömt das Abgas nach oben und wird durch das jeweils im Bereich der Durchtrittsöffnungen befindliche Leitblech 6 in horizontaler Richtung abgelenkt. Auf diese Weise wird im Inneren des Abgaskanals 4 eine über den gesamten Querschnitt sich erstreckende recht gleichmäßige horizontale Strömung in Richtung auf den Sammelkanal 8 erzeugt.

In Fig. 2 ist eine Abwandlung der Ausführungsform aus Fig. 1 dargestellt. Diese unterscheidet sich lediglich dadurch, daß die einzelnen Leitbleche 6a an ihrer jeweils dem Sammelkanal 8 abgewandten Stirnseite mit einem etwa vertikal verlaufenden Schottblech 6b verbunden sind. Dieses Schottblech 6b reicht bis zum Boden des Abgaskanals 4 hinunter. Auf diese Weise wird von vornherein eine Zwangsausrichtung der Abgasströmung erreicht, da das zwischen zwei unmittelbar benachbarten Schottblech 6b verbunden sind. Dieses Schottblech 6b reicht bis zum Boden des Abgaskanals 4 hinunter. Auf diese Weise wird von vomherein eine Zwangsausrichtung der Abgasströmung erreicht, da das zwischen zwei unmittelbar benachbarten Schottblechen 6b einströmende Abgas von der Wandung des Abgaskanals 4 und diesen beiden Schottblechen 6b vollständig eingeschlossen ist und nur durch die zwischen den beiden zugeordneten Leitblechen 6a der beiden Schottwände 6b befindliche axiale Öffnung abströmen kann, also zwangsläufig eine horizontale Strömung annehmen muß. Die Ausführungsform der Fig. 2 bringt gegenüber derjenigen der Fig. 1 jedoch keine nennenswerten Verbesserungen.

Durch die Erfindung wird das bisher bei einer Gestaltung des Abgaskanals 4 wie in Fig. 8 (oder des Abgaskanals 4a in Fig. 9) festgestellte ungleichmäßige Abströmen des Abgases aus dem Inneren des Heizraums 1 beseitigt. Die auftretenden Druckverluste im Abgaskanal 4 bzw. 4a führten bei der bisherigen Gestaltung in dem Teil des Heizraums 1, der dem Sammelkanal 8 näher lag, zu einer deutlich stärkeren Abgasströmung. In den weiter entferten Bereichen war die Abgasströmung merklich schwächer, so daß es zu den Ungleichmäßigkeiten in der Wärmeverteilung kam.

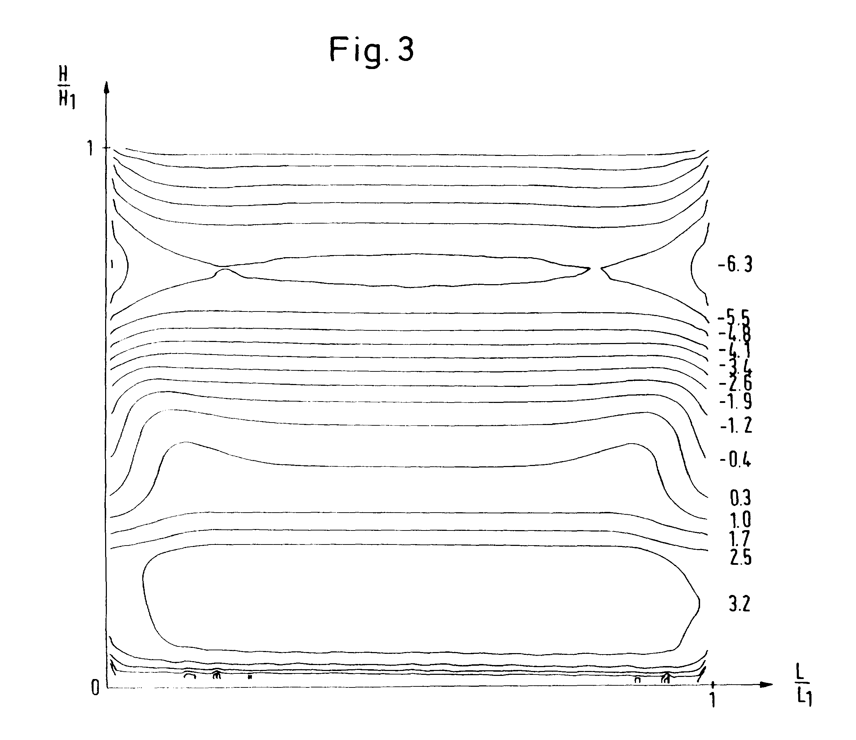

Wie wirksam die erfindungsgemäße Maßnahme des Einbaus von Strömungsleitkörpem in den Abgaskanal ist, zeigt sich an einer Analyse der Abgasströmung in Form eines Strömungsprofils, wie es in Fig. 3 dargestellt ist. In dieser Grafik sind (als Parameterwerte eingetragen) die vertikalen Komponenten der Abgasströmungsgeschwindigkeit im unmittelbaren Nahbereich einer Wärmetauscherrohrreihe 3 in einem Querschnitt parallel zur Ebene der Wärmetauscherrohrreihe 3 dargestellt. Es sind die Linien gleicher Strömungsgeschwindigkeit in Abhängigkeit vom Ort L entlang der Länge L1 des Abgaskanals und von der Höhe H vom Boden des Heizraums (Gesamthöhe H1) eingetragen worden.

Die negativen Werte der Strömungsgeschwindigkeit zeigen, daß in der oberen Hälfte des Heizraums in unmittelbarer Nähe der Wärmetauscherrohre die Strömung des Verbrennungsabgases von unten nach oben verläuft, da sich zwischen zwei Wärmetauscherrohrreihen walzenförmige Strömungen ausbilden, die in der Mitte (im Bereich einer Brennerebene) nach unten gerichtet sind. Erst in der unteren Hälfte des Heizraums strömt das Verbrennungsabgas an den Wärmetauscherrohren entlang nach unten zu den Durchtrittsöffnungen in der Seitenwand des jeweiligen Abgaskanals. Man erkennt deutlich, daß in Richtung des Abgaskanals bei konstanter Höhe über dem Boden des Heizraums nur sehr geringe Unterschiede in der vertikalen Komponente der Strömungsgeschwindigkeit, die ein Maß für die Intensität der stattfindenden Wärmeübertragung durch Konvektion ist, auftreten.

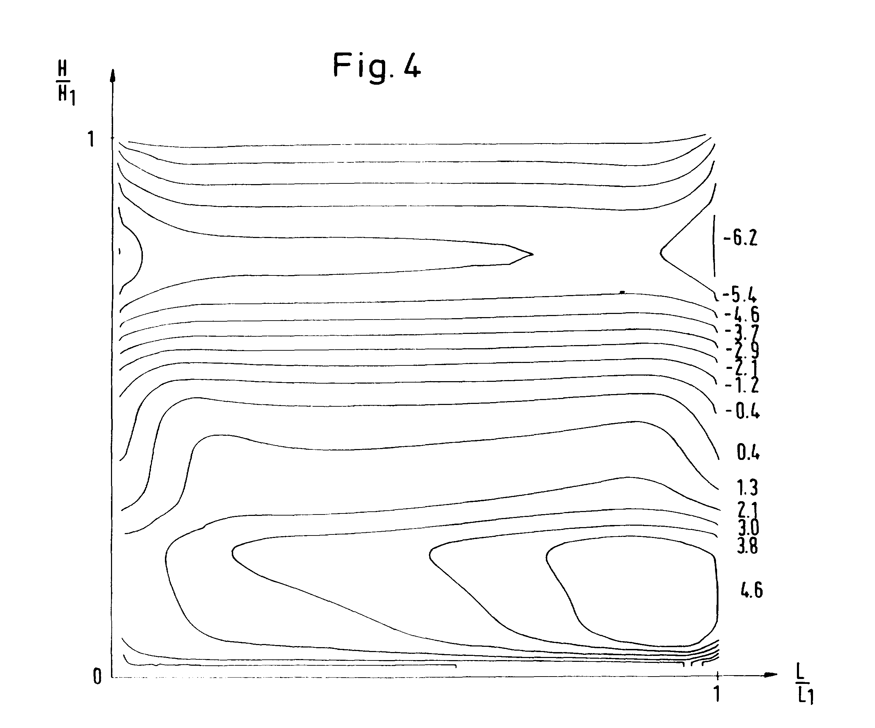

Dagegen sind diese Unterschiede, wie die Vergleichsdarstellung der Fig. 4 zeigt, die eine entsprechende Auswertung für einen Heizraum mit herkömmlich entsprechend Fig. 8 ausgeführtem Abgaskanal wiedergibt, sehr ausgeprägt. Der untere rechte Teil dieser Grafik stellt den Bereich mit der bei weitem höchsten positiven (d.h. nach unten gerichteten) vertikalen Geschwindigkeitskomponente dar. Das bedeutet, daß an dieser Stelle des Heizraumquerschnitts, nämlich in unmittelbarer Nähe des Ausgangs des Abgaskanals aus dem Heizraum der weitaus stärkste Massenfluß des Verbrennungsabgases vorliegt, daß also in diesem Bereich eine deutlich stärkere Erwärmung der Wärmetauscherrohre durch die intensivere Konvektion stattfinden muß als in den übrigen Bereichen.

## Patentansprüche

1. Anlage zur indirekten Übertragung von Wärme auf ein strömendes Prozeßmedium, insbesondere zur Durchführung der Dampfreformierung von Kohlenwasserstoffen, mit einem Heizraum (1), der von oben durch zu mehreren Brennerreihen angeordneten Brennem (2) beheizbar ist und durch den hindurch in vertikalen Längsebenen mehrere Reihen von Wärmetauscherrohren (3) geführt sind, durch die das Prozeßmedium hindurchleitbar ist, wobei die Verbrennungsabgase der Brenner (2) durch parallel zueinander und zu den Reihen der Wärmetauscherrohre (3) auf den Boden des Heizraums (1) angeordnete Abgaskanäle (4) seitlich aus dem Heizraum (1) herausführbar sind und wobei die Abgaskanäle (4) aus feuerfestem Material gebildet sind, einen im wesentlichen rechteckigen, in axialer Richtung konstanten Querschnitt aufweisen und an ihren Längsseiten im bodennahen Bereich mit über die gesamt axiale Länge verteilten Öffnungen (5) für den Übertritt der Abgase aus dem Heizraum (1) in das Innere des jeweiligen Abgaskanals (4) versehen sind,
dadurch gekennzeichnet,
daß zur Vergleichmäßigung der Strömungsverhältnisse des Abgases im Bereich des unteren Teils der Reihen der Wärmetauscherrohre (3) im Inneren der Abgaskanäle (4) in Axialrichtung der Abgaskänäle (4) verlaufende Strömungsleitkörper angeordnet sind,
die abschnittsweise im wesentlichen horizontal verlaufende Leitbleche (6, 6a) aufweisen und in einer treppenförmigen Konfiguration zueinander angeordnet sind, wobei die Treppenform zum seitlichen Ausgang des Abgaskanals (4) hin abwärts gerichtet ist.

2. Anlage nach Anspruch 1,
dadurch gekennzeichnet,
daß sich die einzelnen unmittelbar benachbarten Leitbleche (6, 6a) jeweils teilsweise überlappen.

3. Anlage nach einem der Ansprüche 1 oder 2,
dadurch gekennzeichnet,
daß die Strömungsleitkörper jeweils ein sich im wesentlichen quer zur Längsrichtung des Abgaskanals (4) vom Boden aus erstreckendes Schottblech (6b) aufweisen, das an der von der Seite des Rauchgasabzugs abgewandten Seite mit dem jeweiligen Leitblech (6a) verbunden ist.

## Claims

1. Plant for indirectly transferring heat to a flowing process medium, in particular for the steam reforming of hydrocarbons, with a heating chamber (1), which can be heated from the top by burners (2) disposed in a plurality of burner rows and through which a plurality of rows of heat exchanger tubes (3) extend in vertical longitudinal planes, through which tubes the process medium can be passed, wherein the waste combustion gases of the burners (2) can be removed laterally from the heating chamber (1) through waste gas ducts (4) disposed parallel to one another and to the rows of heat exchanger tubes (3) at the floor of the heating chamber (1), and wherein the waste gas ducts (4) are formed from a refractory material, have a substantially rectangular cross section, which is constant in the axial direction, and are provided at their longitudinal sides in the region near the floor with openings (5), which are distributed over the entire axial length, for the waste gases to pass from the heating chamber (1) into the interior of the respective waste gas duct (4),
characterised in that flow guide bodies, which extend in the axial direction of the waste gas ducts (4), are disposed in the interior of the waste gas ducts (4) to equalise the flow conditions of the waste gas in the region of the lower part of the rows of heat exchanger tubes (3), which bodies comprise baffles (6, 6a), which extend substantially horizontally in sections, and are associated with one another in a stepped configuration, wherein the step form is directed downward towards the lateral exit of the waste gas duct (4).

2. Plant according to claim 1,
characterised in that the individual, directly adjacent baffles (6, 6a) in each case overlap partly.

3. Plant according to claim 1 or 2,
characterised in that the flow guide bodies each comprise a dividing plate (6b) which extends from the floor substantially transversely to the longitudinal direction of the waste gas duct (4) and is connected to the respective baffle (6a) at the side which is remote from the side of the flue gas outlet.

## Revendications

1. Installation pour le transfert indirect de chaleur à un fluide de procédé circulant, en particulier pour mettre en oeuvre le reformage à la vapeur d'hydrocarbures, comportant un espace de chauffage (1), qui peut être chauffé du haut par des brûleurs (2) agencés en plusieurs rangées de brûleurs et à travers lequel sont guidées, dans des plans longitudinaux verticaux, plusieurs séries de tubes d'échange thermique (3), à travers lesquels le fluide de procédé peut être conduit, les gaz d'échappement de combustion des brûleurs (2) pouvant être évacués latéralement de l'espace de chauffage (1) par des canaux de gaz d'échappement (4) agencés parallèlement les uns aux autres et aux séries des tubes d'échange thermique (3) sur le fond de l'espace de chauffage (1), et les canaux de gaz d'échappement (4) étant formés d'une matière réfractaire, présentant une section transversale généralement rectangulaire, constante en direction axiale, et étant munis, sur leurs faces longitudinales, dans la zone à proximité du fond, d'ouvertures (5) réparties sur toute la longueur axiale pour le transfert des gaz d'échappement de l'espace de chauffage (1) à l'intérieur du canal de gaz d'échappement respectif (4),
caractérisée en ce que, pour uniformiser les conditions d'écoulement du gaz d'échappement dans la zone de la partie inférieure des séries des tubes d'échange thermique (3), à l'intérieur des canaux de gaz d'échappement (4), sont agencés des corps de guidage d'écoulement s'étendant en direction axiale des canaux de gaz d'échappement (4), qui présentent des tôles de guidage (6,6a) s'étendant généralement horizontalement par tronçon et sont agencés les uns par rapport aux autres en une configuration en forme d'escalier, la forme d'escalier étant orientée, en descendant, vers la sortie latérale du canal de gaz d'échappement (4).

2. Installation selon la revendication 1,
caractérisée en ce que les tôles de guidage individuelles (6,6a) directement voisines se chevauchent à chaque fois partiellement.

3. Installation selon une des revendications 1 ou 2,
caractérisée en ce que les corps de guidage d'écoulement présentent, à chaque fois, une tôle formant cloison (6b) s'étendant généralement transversalement à la direction longitudinale du canal de gaz d'échappement (4) à partir du fond, qui est reliée, sur le côté opposé au côté d'évacuation des gaz de fumée, à la tôle de guidage respective (6a).
